Europäisches Patentamt

European Patent Office

Office européen des brevets

(11) Publication number: **0 425 764 A2**

# EUROPEAN PATENT APPLICATION

(21) Application number: 90113707.5

(22) Date of filing: 17.07.90

(51) Int. Cl.5: **G06F 5/06**

(30) Priority: 30.10.89 JP 282323/89

(43) Date of publication of application:
08.05.91 Bulletin 91/19

(84) Designated Contracting States:
DE FR GB

(71) Applicant: MITSUBISHI DENKI KABUSHIKI
KAISHA
2-3, Marunouchi 2-chome Chiyoda-ku
Tokyo(JP)

(72) Inventor: Furuse, Iwato, c/o Computer ·
Seisakusho
Mitsubishi Denki K. K., 325, Kamimachiya
Kamakura-shi, Kanagawa-ken(JP)

(74) Representative: Pfenning, Meinig & Partner
Mozartstrasse 17
W-8000 München 2(DE)

(54) **Input data control system and data management apparatus for use therewith.**

(57) Disclosed is an input data control system having a plurality of buffers for storing input data transmitted from a terminal, and management information storage regions for storing management information on the input data storage regions and the input data stored therein. A data I/O management program permits the corresponding input data storage region to store the data given from the terminal on the basis of the management information stored in the management information storage regions and updates the corresponding management information.

EP 0 425 764 A2

# INPUT DATA CONTROL SYSTEM AND DATA MANAGEMENT APPARATUS FOR USE THEREWITH

The present invention is directed generally to an electronic computer system, and more particularly, to an input data control system employing a data I/O management program as well as to a data management apparatus for use with this control system.

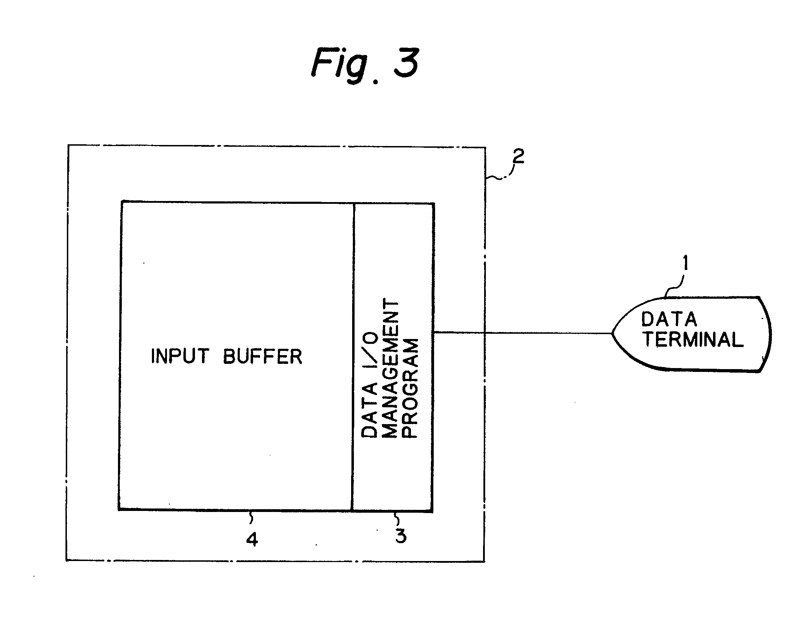

Fig. 3 is a block diagram illustrating a prior art of this type of input data control system. Referring to Fig. 3, the numeral 1 represents a terminal of an IC card reader or a personal computer; and 2 denotes a host computer to which a plurality of terminals 1 are connectable. Designated at 3 is a data I/O management program executed by a central processing unit (CPU) incorporated into the host computer 2 and functioning as a part of an operating system (OS) for controlling and managing the entire electronic computer system. Indicated at 4 is an input buffer provided as an input data storage region for temporarily storing input data sent from the terminal 1. The input buffers are allocated by a predetermined capacity onto a main memory region within the host computer 2 per terminal.

The description will next focus on the operation.

The data transmitted from the terminal 1 concomitantly with the occurrence of events is received by the data I/O management program 3 incorporated into the host computer 2, which program 3 in turn permits the input buffer 4 to unconditionally store the received data and at the same moment permits some other program such as a corresponding application program to take over control. After the input data has been processed by another program, the control reverts to the data I/O management program 3 which thereafter receives data transmitted from the terminal 1 concomitantly when a subsequent event takes place and permits the input buffer 4 to store the received data.

The prior art input data control system has the above-described arrangement, and hence the data stored in the input data storage region are processed by some other program. The next data given from the terminal is not allowed to be received unless the former data has become unnecessary. For this reason, the efficiency at which the data are transmitted and received between the host computer and the terminal can not be improved.

It is a primary object of the present invention, which has been devised to obviate the foregoing problems, to provide an input data control system capable of continuously processing plural pieces of data transmitted from a terminal concomitantly with the occurrence of events.

To accomplish this object, according to one aspect of the invention, there is provided an input data control system comprising: a plurality of input data storage regions; and management information storage regions for storing management information on input data stored in the input data storage regions as well as on the input data storage regions, characterized in that a data I/O management program permits the corresponding input data storage region to store the data from the terminal on the basis of the management information stored in the management information storage region and updates the corresponding management information.

In accordance with the present invention, there are provided a plurality of input data storage regions and management information storage regions. The input data storage regions are allocated per input data, thereby making it possible to continuously receive data from the terminal without waiting for the completion of processing of the data already inputted by use of other program. As a result, data transmitting/receiving efficiency between the terminal and the host computer can be ameliorated.

Other objects and advantages of the present invention will become apparent during the following discussion taken in conjunction with the accompanying drawings, in which:

Fig. 1 is a block diagram showing one embodiment of an input data control system according to the present invention;

Fig. 2 is a flowchart illustrating operations of the embodiment thereof; and

Fig. 3 is a block diagram depicting a prior art input data control system.

One embodiment of the present invention will hereinafter be described with reference to the accompanying drawings.

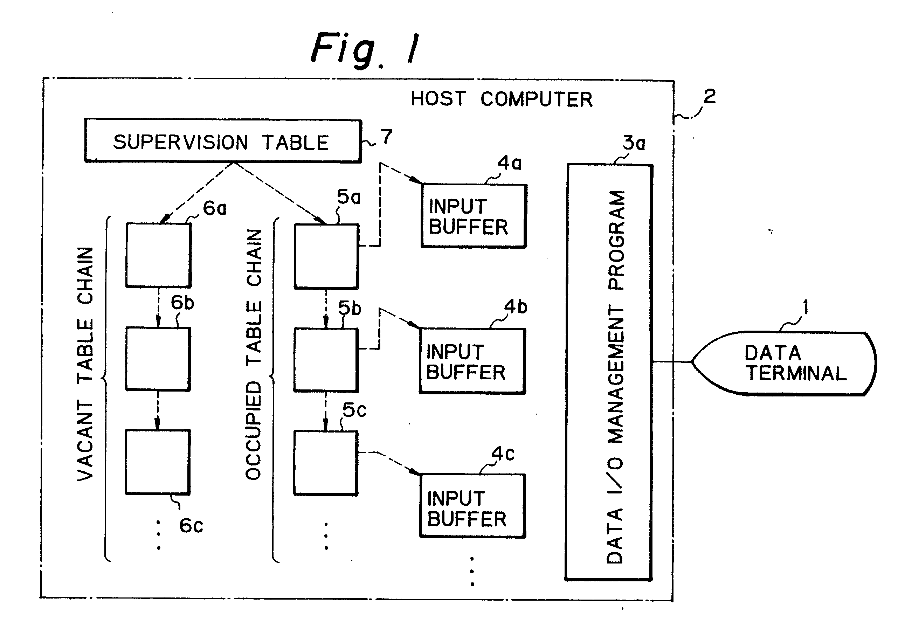

Turning first to Fig. 1, there is illustrated a block diagram of one embodiment of an input data control system of the invention. Referring again to Fig. 1, the numeral 1 represents a terminal; and 2 denotes a host computer. Designated at 3a is a data I/O management program for receiving the data transmitted from the terminal 1 on the basis of the input data control system and transmitting the data to the terminal 1. The symbols 4a, 4b, 4c ... represent a plurality of input buffers (input data storage regions), provided on a main memory region, for respectively storing the data transmitted from the terminal 1 every time an event happens. The symbols 5a, 5b, 5c ... and 6a, 6b, 6c ... denote input data control tables (management information storage regions), provided to exhibit one-to-one correspondence with respect to the input buffers 4a, 4b, 4c for storing control information on the input buffers as well as on the input data stored therein. The input data control tables 5a, 5b, 5c ... are provided for the occupied input buffers in which the input data have been stored and the process performed by another program is not yet finished. Positional information (addresses) of the corresponding input buffers and lengths of the input data stored therein are set in these tables 5a, 5b, 5c ... Except in the case of the last table, positional information (an address) for the next table is set in the previous table to chain them in sequence to constitute an occupied table chain. The input data control tables 6a, 6b, 6c ... are provided for vacant input buffers (including the unnecessary used-buffers in which the input data have already been processed by other program). The positional information of the corresponding input buffers are set in these tables 6a, 6b, 6c ... Except in the case of the last table, positional information for the next table is set in the previous table to likewise chain them in sequence to constitute a vacant table chain. A control table supervision table (a management information storage region) generally indicated at 7 serves to supervise the input data control tables 5a, 5b, 5c ... and 6a, 6b, 6c ... The positional information of the top tables of the occupied input data control tables 5a, 5b, 5c ... and the vacant input data control tables 6a, 6b, 6c ... are set in the supervision table 7. Note that the foregoing individual tables (management information tables) are provided on the main memory region as in the case of the input buffers.

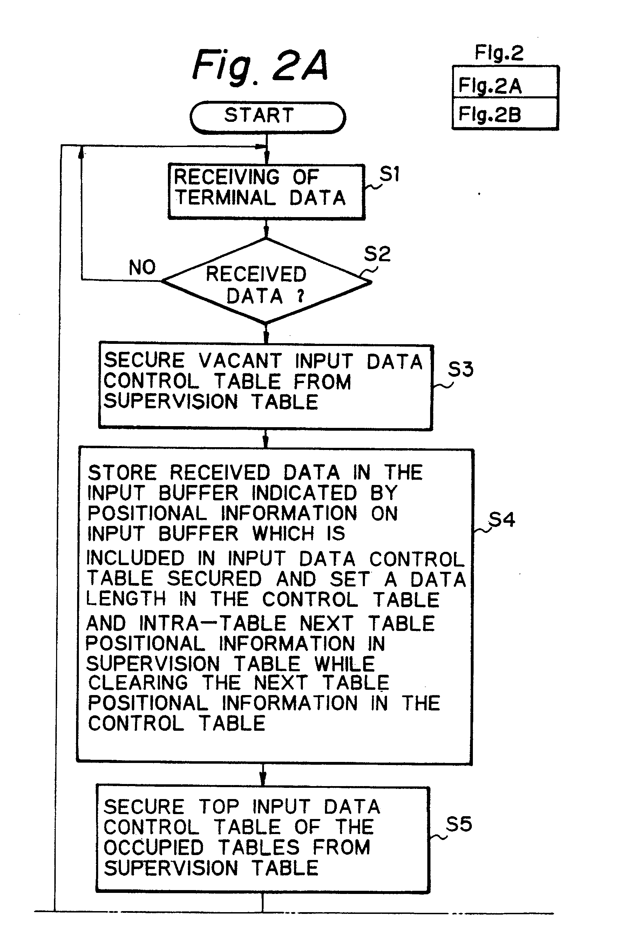

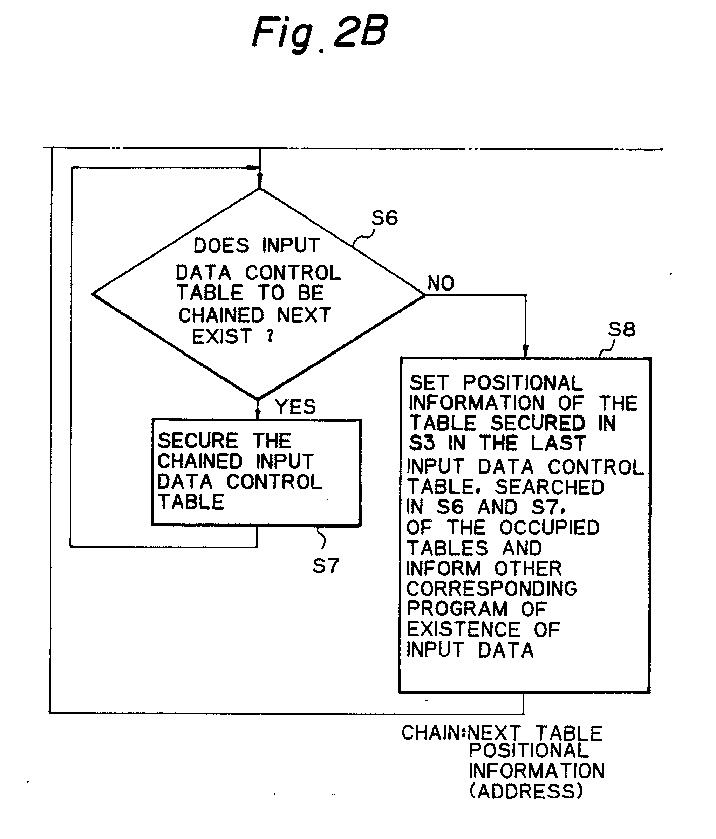

Fig. 2 is a flowchart showing processes when the data I/O management program 3a inputs the data transmitted from the terminal 1 on the basis of the present control system.

A descriptive emphasis will be placed on the operation, referring to Figs. 1 and 2.

Referring first to Fig. 2, steps S1 and S2 are combined to form a process loop for the data from the terminal 1, wherein a terminal data receiving process (step S1) continues till the presence of the received data is detected from a judgment made in step S2. Upon detection of the input data sent from the terminal 1, the vacant input data control table 6a is secured (step S3) on the basis of the positional information stored in the supervision table 7, and the operation moves to step S4. In step S4, the received data are stored in the corresponding input buffers on the basis of positional information (addresses) of the input buffers which are included in the input data control table 6a secured in step S3. The next table positional information (an address) existing in the table 6a is set in the supervision table 7 as well as a length of the input data stored in the input data control table 6a. The next table positional information stored in the table 6a is cleared. Subsequent to this step, the top input data control table 5a of the occupied tables is ensured (step S5) in accordance with the positional information stored in the supervision table 7. A subsequent step is to judge whether or not an input data control table to be chained next is present on the basis of the existence or non-existence of the next table positional information stored therein (step S6). If such a table is present, the operation proceeds to step S7 where the input data control table chained is secured. Thereafter, the operation returns to step S6. The last input data control table of the occupied tables is searched by repeating steps S6 and S7. If the next table positional information can not be seen in the secured input data control table, and when judging that the input data control table to be chained next in step S6 does not exist, the operation moves to step S8. In step S8, the positional information of the table secured in step S3 is set in the last input data control table of the occupied tables which has been searched in steps S6 and S7, and at the same time the fact that the input data exists in another corresponding program is conveyed.

In this manner, the data transmitted from the terminal 1 concomitantly with the occurrence of the events are stored in the input buffer corresponding to the vacant input data control table per data. This input data control table is chained to the last input data control table of the occupied tables, thereby making it possible to continuously receive plural pieces of data transmitted from the terminal 1 each time an event occurs, without waiting for the completion of processing by another program. Besides, a data transmitting/receiving efficiency between the host computer 2 and the terminal 1 can be improved.

Further, if requested by another program which has been informed of the existence of data, the data I/O output management program 3a secures the occupied input data control table 5a on the basis of the positional information stored in the supervision table 7 and permits another program to take over the input data stored in the corresponding input buffer 4a. Simultaneously, the program 3a functions to set the next table positional information in the supervision table 7 from the table 5a. The next table positional information stored in the table 5a is then cleared. The top input data control table 6a of the vacant tables is secured in accordance with the positional information set in the supervision table 7. As in steps S6 and S7 shown in Fig. 2, whether or not the input data control table to be chained next is present is judged to search the last input data control table of the vacant tables. The positional information of the input data control table 5a which becomes vacant is set, which table 5a is to be chained.

The embodiment discussed above has dealt with a case where the data are transmitted from the single terminal 1. As a matter of course, however, a plurality of terminals may be provided. In this case, there must be prepared a plurality of input buffers, input data control tables and a supervision table thereof for every terminal which are illustrated in Fig. 1.

The above-described embodiment also exemplifies a system in which the input data control table is chained in the last position. Such a table may, however, be chained in the top position.

As discussed above, the present invention exhibits the following advantages. The input data control system includes: a plurality of input data storage regions; and management information storage regions for storing management information on the input data stored in the input data storage regions as well as on these input data storage regions. Based on this construction, the data I/O management program permits the corresponding input data storage region to store the data from the terminal on the basis of the management information stored in the management information storage region and updates the corresponding management information. It is therefore possible to continuously process the plural pieces of data transmitted from the terminal concomitantly with the occurrence of events and to improve data transmitting/receiving efficiency between the host computer and the terminal.

Although the illustrative embodiment has been described in detail with reference to the accompanying drawings, it is to be understood that the present invention is not limited to this precise embodiment. A variety of modifications or changes may be effected therein by one skilled in the art without departing from the scope or spirit of the invention.

## Claims

1. A data management apparatus having input/output means, comprising:

(a) a memory having a plurality of buffers for storing data;

(b) processing means for processing data stored in the buffer and releasing the buffer for next data; and

(c) data management means for finding an available buffer and receiving data from the input/output means and storing the data in the available buffer so that the memory continuously receives data and stores it in the next available buffer from the input/output means while the processing means processes data stored in other buffer.

2. A data management apparatus for coupling input/output means, comprising:

(a) a memory having a plurality of buffers for storing data;

(b) a management information table for storing management information which provides availability information on the buffers; and

(c) data management means for finding an available buffer based on the management information, receiving data from the input/output means to the available buffer and updating the management information table to record buffer unavailability.

3. The data management apparatus of Claim 2, wherein

(a) the management information table includes a random access memory; and

(b) the data management means includes a computer program for inputting/outputting data.

4. The data management apparatus of Claim 2, wherein the management information table includes:

(a) a plurality of data control tables, each of which corresponding to the buffer and having a chain pointer to chain another data control table; and

(b) a supervision table having a supervision pointer to point the first data control table chained by the chain pointer.

5. The data management apparatus of Claim 4, wherein the data control table includes:

(a) a buffer pointer to indicate the corresponding buffer; and

(b) length information of the data stored in the buffer.

6. The data management apparatus of Claim 4, wherein the management information table includes:

(a) a vacant table chain having a set of the data control tables chained by the chain pointers of the data control tables whose corresponding buffers are available for receiving data; and

(b) an occupied table chain having a set of data control tables chained by the pointer, whose corresponding buffers are occupied by data, and the supervision table includes:

(a) a first supervision pointer to indicate the vacant table chain; and

(b) a second supervision pointer to indicate the occupied table chain.

7. The data management apparatus of Claim 6, wherein the data management means includes:

(a) means for selecting one data control table from the vacant table chain;

(b) means for storing data in the available buffer corresponding to the data control table selected by the selecting means;

(c) means for disconnecting the data control table selected by the selecting means from the vacant table chain by updating the pointer; and

(d) means for chaining the data control table disconnected to the occupied table chain.

8. The data management apparatus of Claim 7, wherein the selecting means includes:

(a) means for obtaining the first supervision pointer from the supervision table; and

(b) means for finding the first data control table in the vacant table chain indicated by the first supervision pointer,

the disconnecting means includes means for replacing the first pointer with the chain pointer in the first data control table found by the finding means, and

the chaining means includes:

(a) means for obtaining the second supervision pointer from the supervision table;

(b) means for finding the data control table from the occupied table chain indicated by the second supervision pointer;

(c) means for tracing the occupied table chain using the chain pointer to find the last data control table of the occupied table chain; and

(d) means for replacing the chain pointer of the last data control table with the pointer in the first supervision pointer.

9. The data management apparatus of Claim 7, wherein the selecting means includes:

(a) means for obtaining the first supervision pointer from the supervision table; and

(b) means for finding the first data control table in the vacant table chain indicated by the first supervision pointer,

the disconnecting means includes means for replacing the first pointer with the chain pointer in the first data control table found by the finding means, and

the chaining means includes:

(a) means for obtaining the second supervision pointer from the supervision table;

(b) means for finding the data control table from the occupied table chain indicated by the second supervision pointer; and

(c) means for replacing the chain pointer of he data control table found by the finding step with the first supervision pointer.

10. A data management method for communicating data with an input/output means, comprising the steps of:

(a) reserving a memory for a plurality of the buffers and a management information table for managing the status of the buffers;

(b) awaiting the data from the input/output means;

(c) finding an available buffer out of a plurality of buffers using the information stored in the management information table;

(d) storing the data received from the input/output means to the available buffer; and

(e) updating the management information table to record the latest status of the buffers.

11. The data management method of Claim 10, wherein the reserving step includes the steps of:

(a) assigning a plurality of tables, each of which corresponding to the buffer; and

(b) chaining the tables by pointers and creating a table chain, and

the updating step includes the steps of:

(a) disconnecting the table, the corresponding buffer of which is occupied by data, from the table chain; and

(b) connecting the table disconnected by the disconnecting step to another table chain by finding the predetermined position of another table chain.

12. In an electronic computer system including a data I/O management program for managing inputting/outputting of data with respect to a terminal and permitting an input data storage region to store the data received from the terminal, the stored input data being processed by another program,

an input data control system comprising:

(a) a plurality of input data storage regions; and

(b) management information storage regions for storing management information on input data stored in the input data storage regions as well as on these input data storage regions, characterized in that a data I/O management program permits the corresponding input data storage region to store the data from the terminal on the basis of the management information stored in the management information storage region and updates the corresponding management information.

13. The input data control system of Claim 12, wherein the plurality of data storage regions exhibit one-to-one correspondence with respect to the management information storage regions.

14. The input data control system of Claim 12, wherein the management information stored in the management information storage regions includes positional information on the corresponding data storage region, the length of the input data stored in the data storage region and positional information of the next management information storage region.

15. The input data control system of Claim 12, further comprising a region for storing information for supervising the management information storage regions classified into vacant regions and occupied regions to thereby constitute chains respectively for the management.

16. The input data control system of Claim 15, wherein all of the input data storage regions, the management information storage regions and the supervision information storage region are provided in a main memory region.

*Fig. I*

# Fig. 2A

Fig.2

| Fig.2A |
|--------|
| Fig.2B |

START

RECEIVING OF TERMINAL DATA — S1

RECEIVED DATA ? — S2   NO

SECURE VACANT INPUT DATA CONTROL TABLE FROM SUPERVISION TABLE — S3

STORE RECEIVED DATA IN THE INPUT BUFFER INDICATED BY POSITIONAL INFORMATION ON INPUT BUFFER WHICH IS INCLUDED IN INPUT DATA CONTROL TABLE SECURED AND SET A DATA LENGTH IN THE CONTROL TABLE AND INTRA—TABLE NEXT TABLE POSITIONAL INFORMATION IN SUPERVISION TABLE WHILE CLEARING THE NEXT TABLE POSITIONAL INFORMATION IN THE CONTROL TABLE — S4

SECURE TOP INPUT DATA CONTROL TABLE OF THE OCCUPIED TABLES FROM SUPERVISION TABLE — S5

# Fig. 2B

S6

DOES INPUT
DATA CONTROL
TABLE TO BE
CHAINED NEXT
EXIST ?

NO

YES

S7

SECURE THE
CHAINED INPUT
DATA CONTROL
TABLE

S8

SET POSITIONAL
INFORMATION OF THE
TABLE SECURED IN
S3 IN THE LAST
INPUT DATA CONTROL
TABLE, SEARCHED
IN S6 AND S7,
OF THE OCCUPIED
TABLES AND
INFORM OTHER
CORRESPONDING
PROGRAM OF
EXISTENCE OF
INPUT DATA

CHAIN:NEXT TABLE
POSITIONAL
INFORMATION
(ADDRESS)

# Fig. 3